# EUROPÄISCHE PATENTANMELDUNG

(11) **EP 3 951 033 A1**
(43) Veröffentlichungstag der Anmeldung: **09.02.2022**
(21) Anmeldenummer: 21187712.1
(22) Anmeldetag: 26.07.2021
(51) Int. Cl.: D01G 31/00

(54) **ERFASSUNG DES ABGANGES IN EINER FASERVORBEREITUNGSANLAGE**

(30) Priorität: 05.08.2020 CH 9752020
(71) Anmelder: Maschinenfabrik Rieter AG, 8406 Winterthur (CH)
(72) Erfinder: WOLFER, Tobias, 8008 Zürich (CH); CEVONA, Petr, 56201 Usti nad Orlici (CZ); STEJSKAL, Pavel, 561 02 Dolni Dobrouc (CZ)

(57) **Zusammenfassung**

Die Erfindung betrifft eine Vorrichtung und ein Verfahren zur Erfassung eines Abganges (31) in einer Faservorbereitungsanlange mit einer Mehrzahl von Reinigungsstellen und einer Transportleitung (12), welche mit den Reinigungsstellen verbunden und in einen zentralen Behälter (21) geführt ist. Der zentrale Behälter (21) ist mit einer Unterdruckquelle (26) verbunden und der Abgang (31) von jeweils einer Reinigungsstelle wird durch die Transportleitung (12) mit Transportluft (22) zum zentralen Behälter (21) gesaugt. Der Abgang (31) jeder Reinigungsstelle wird separat dem zentralen Behälter (21) zugeführt. Im zentralen Behälter (21) wird der Abgang (31) von der Transportluft (22) getrennt und in eine Waage (24) übergeben und gewogen. Mit einer auf einen Innenraum der Waage (24) gerichteten Kamera (25) wird der sich in der Waage (24) befindliche Abgang (31) optisch erfasst.

## Beschreibung

Die Erfindung betrifft ein Verfahren zur Erfassung eines Abganges in einer Faservorbereitungsanlange.

In einer Faservorbereitungsanlage in einer Spinnerei werden angelieferte Fasern respektive Faserflocken für die Verwendung in einer Spinnmaschine vorbereitet. In einer Faservorbereitungsanlage durchlaufen die für die Spinnerei vorzubereitenden Fasern mehrere Verarbeitungsstufen. In einer ersten Stufe werden die Fasern in Form von Faserflocken aus Faserballen herausgelöst. Hierfür finden meist sogenannte Ballenöffner Verwendung. Über eine pneumatische Flockenförderung werden diese Faserflocken aus dem Ballenöffner herausgebracht und beispielsweise an eine nachfolgende Reinigungsmaschine verbracht. In den weiteren Stufen weist die Faservorbereitungsanlage eine Abfolge von Reinigungsmaschinen auf, welche von den Fasern respektive Faserflocken durchlaufen werden. Die Reinigungsmaschinen sind dabei in ihrer Abfolge und Bauart auf die zu verarbeitenden Fasern abgestimmt und dienen der Reinigung, Mischung und der Auflösung der Faserflocken in Einzelfasern sowie deren Parallelisierung. Die Anordnung der einzelnen Reinigungsmaschinen in einer Faservorbereitungsanlage kann verschieden ausgeführt sein, dies ist unter anderem abhängig vom zu verarbeitenden Rohstoff und dem zu erzielenden Produkt.

Als Reinigungsmaschinen kommen dabei beispielsweise Grobreiniger, Feinreiniger, Fremdteilabscheider wie auch Karden oder Krempel zum Einsatz. Auch andersartige Maschinen wie Speicher oder Mischer können mit Reinigungsmodulen ausgestattet sein welche ebenfalls zu den Reinigungsmaschinen zu zählen sind. Die einzelnen Punkte in einer Maschine an welcher ein Abfallprodukt aus der Reinigung, der sogenannte Abgang, anfällt werden sinngemäss als Reinigungsstellen bezeichnet. Damit kann eine einzelne Reinigungsmaschine über mehrere Reinigungsstellen verfügen, beispielsweise können in einer Karde der Abgang eines Vorreissers separat vom Abgang eines Wanderdeckelaggregates abgeführt werden. Umgekehrt kann jedoch auch innerhalb der Maschine eine Zusammenfassung des Abganges welcher an verschiedenen Stellen in der Maschine anfällt erfolgen. Als Reinigungsstelle wird demnach in der nachfolgenden Beschreibung jede Stelle einer Maschine bezeichnet von welcher ein separater Anschluss an einen nachfolgenden Abtransport des Abganges vorgesehen ist.

Die Fasern oder auch Faserflocken werden zwischen den Maschinen in der Regel durch ein pneumatisches Transportsystem mit Hilfe von Transportluft gefördert. Vor den Reinigungsmaschinen wird die Transportluft soweit als notwendig durch ein separates Abluftsystem abgeführt. In der Reinigungsmaschine respektive Reinigungsstelle selbst fällt sogenannter Abgang an, dieser umfasst die aus den Fasern respektive Faserflocken im Reinigungsprozess abgeschiedenen Schmutzpartikel, Fremdteile, Samen- oder Stengelteile, Staubpartikel oder auch Kurzfasern oder Faserverknotungen, sogenannten Nissen. Ebenfalls in den Abgang geraten bedingt durch die Konstruktion der Reinigungsstellen auch Gutfasern, also Fasern welche in der nachfolgenden Spinnerei eigentlich verarbeitet werden könnten. Der Anteil von Gutfasern im Abgang einer Reinigungsstelle sollte möglichst gering gehalten werden. Es ist jedoch nicht vollumfänglich zu vermeiden, dass durch die Reinigung des Fasergutes auch Gutfasern aus dem Fasergut abgetrennt werden und in den Abgang gelangen. Umso intensiver die Reinigung des Fasergutes erfolgen soll desto höher wird der Anteil an Gutfasern im Abgang. Wird die Reinigungsstelle derart verstellt, dass ein geringer Anteil an Gutfasern entsteht, wird das Fasergut weniger gut gereinigt.

Karden, welche die Faserflocken in Einzelfasern auflösen und zu einem Faserband formen, bilden oft den Abschluss der Faservorbereitungsanlage. Anschliessend an die Karden werden die Fasern in Form von Faserbändern an die Spinnereivorbereitung weitergegeben. In der Spinnereivorbereitung werden die Faserbänder durch Strecken, Kämmmaschinen oder Flyer für die Verwendung in Endspinnverfahren bearbeitet.

Aus dem Stand der Technik sind verschiedene Ansätze für eine Überwachung des Abganges in den einzelnen Reinigungsmaschinen bekannt. Beispielsweise offenbart die CH 697 063 A5 eine Vorrichtung an einer Spinnereivorbereitungsmaschine zur Erfassung aus Fremdstoffen und Gutfasern bestehendem Abfall (Abgang). Der Abfall wird dabei in einer Sammeleinrichtung in der Maschine gesammelt und an einem Helligkeitssensor vorbeigeführt. Durch den Helligkeitssensor wird der Anteil an Gutfasern detektiert und die Reinigungsvorrichtung der betreffenden Maschine entsprechend den Vorgaben auf eine Minimierung des Anteils Gutfasern eingestellt. Die EP 0 399 315 hingegen offenbart einen Sensor welcher den Schmutzanteil im Sammelbehälter für den Abgang einer Reinigungsmaschine detektiert und eine Maximierung des Schmutzanteils ermöglicht. Nachteilig an diesen Vorrichtungen ist, dass sie für jede Maschine einzeln vorzusehen sind und dadurch auch die Reinigungsleistung jeder Maschine unabhängig bewertet wird.

Auch aus dem Stand der Technik bekannt ist die Vorgehensweise einer Probennahme. Dabei wird periodisch an den einzelnen Reinigungsstellen eine probe des Abgangs entnommen und dieser auf entsprechenden Labormaschinen untersucht. Nachteilig daran ist, dass diese Verfahrensweise zum einen zeitaufwändig ist und zum anderen die Resultate der Analyse zeitverzögert zur Verfügung stehen.

Die Aufgabe der Erfindung ist es demnach eine Vorrichtung zu schaffen, welche eine zentrale Erfassung des Abgangs ermöglicht und dabei eine Erfassung des Abgangs für eine spätere Analyse erfolgen kann, welche die Möglichkeit zur Optimierung des Betriebs der gesamten Faservorbereitungsanlage sowie der einzelnen Reinigungsstellen schafft.

Die Aufgabe wird gelöst durch ein Verfahren und eine Vorrichtung mit den Merkmalen der unabhängigen Ansprüche.

Zur Lösung der Aufgabe wird ein neuartiges Verfahren zur Erfassung eines Abganges in einer Faservorbereitungsanlange mit einer Mehrzahl von Reinigungsstellen und einer Transportleitung, welche mit den Reinigungsstellen verbunden und in einen zentralen Behälter geführt ist. Der zentrale Behälter ist mit einer Unterdruckquelle zur Erzeugung von Transportluft verbunden und der Abgang wird von jeweils einer Reinigungsstelle durch die Transportleitung mit der Transportluft zum zentralen Behälter gesaugt. Im zentralen Behälter wird der Abgang von der Transportluft getrennt und in eine Waage übergeben und gewogen. Mit einer auf einen Innenraum der Waage gerichteten Kamera wird der sich in der Waage befindliche Abgang optisch erfasst. Dadurch dass eine zentrale Erfassung und Analyse des Abgangs aller Reinigungsstellen einer Faservorbereitungsanlage erfolgt, können die Abläufe an den einzelnen Maschinen einfacher und auch kostengünstiger gestaltet werden. Die Unterdruckquelle kann als Ventilator ausgeführt sein oder auch aus einem Anschluss an ein übergeordnetes Saugsystem der Faservorbereitungsanlage bestehen. Die Trennung des Abgangs von der Transportluft wird mit aus dem Stand der Technik bekannten Mitteln durchgeführt wie beispielsweise Zyklonen oder Filteranlagen. Die Verwiegung und optische Erfassung des Abganges wird als Momentaufnahme vorgenommen, nachdem der Abgang von einer Reinigungsstelle im zentralen Behälter angekommen ist. Praktischerweise wird mit der Verwiegung und optischen Erfassung solange gewartet, bis die Trennung von Abgang und Transportluft abgeschlossen ist. Die für die optische Bilderfassung geeignete Kamera kann eine RGB-Kamera oder eine einfache hell-dunkel CCD-Kamera sein. Die Wahl der Kamera in Bezug auf deren Auflösung und Empfindlichkeit ist aufgrund der nachfolgenden Auswertung zu fällen. Soll nur die Helligkeit beurteilt werden genügt eine s/w Bilderfassung mit geringer Auflösung. Sollen jedoch die einzelnen Schmutzteile erkannt und bestimmten Kategorien zugeordnet werden, ist entweder eine hochauflösende Kamera zu verwenden oder es ist eine hohe Bildfrequenz notwendig.

Der Abgang jeder Reinigungsstelle wird separat dem zentralen Behälter zugeführt. Dazu sind die Verbindungen der Reinigungsstellen mit der Transportleitung einzeln verschliessbar. Durch eine Steuerung können so die Abgangssammelbehälter der einzelnen Reinigungsstellen individuell und nach Bedarf entleert und der jeweilige Abgang der Erfassung zugeführt werden. Von Vorteil ist es, wenn nach Verwiegung und optischer Erfassung des Abgangs die Waage über eine im Boden der Waage befindliche Klappe in einen Restbehälter entleert wird. Durch diese rein mechanische Entleerung des zentralen Behälters wird vermieden, dass eine strömungstechnische Trennung zwischen dem Eingang und dem Austritt des zentralen Behälters notwendig ist. Der Restbehälter wiederum kann in der Folge durch eine Absaugung entleert oder durch einen leeren Restbehälter ausgetauscht werden.

Bevorzugterweise wird durch eine Auswertung der optischen Bilderfassung ein Qualitätsmerkmal des Abgangs bestimmt. Die Auswertung eines erzeugten Bildes kann beispielsweise dadurch erfolgen, dass die Helligkeit respektive das Verhältnis von hell-dunkel bestimmt wird. Bei einem hohen Schmutz oder Trash-Anteil im Abgang erscheint der Abgang dunkler als bei einem hohen Anteil an Gutfasern im Abgang. Das Qualitätsmerkmal kann nun beispielsweise als prozentualer Anteil an Gutfasern ausgedrückt werden oder eine einfache nach einer vorgegebenen Skala zugeordnete Zahl angegeben werden. Das Qualitätsmerkmal kann dabei spezifisch für eine Reinigungsstelle bestimmt werden, da eine einer Reinigungsstelle beispielsweise der Gutfaseranteil wichtig ist, an einer anderen Reinigungsstelle jedoch der Anteil an Staubpartikeln im Schmutz. Das Qualitätsmerkmal kann dabei als ein Code ausgegeben werden welcher nun vorteilhafterweise zur Optimierung einer Einstellung der entsprechenden Reinigungsstelle verwendet wird. In der Steuerung sind dazu Datensätze hinterlegt welche die gewünschten Qualitätsmerkmale aufgrund der Vorgaben durch den Bediener oder eines gewählten Prozesses aufgrund des zu verarbeitenden Produkts enthalten sind. Weichen nun die Qualitätsmerkmale aus der Analyse von den Vorgaben ab wird die Steuerung eine Meldung ausgeben oder bei entsprechender Ausrüstung der Faservorbereitungsanlage und der einzelnen Maschinen selbsttätig eine Korrektur der Einstellung der entsprechenden Reinigungsstelle vornehmen. Bei einer automatisierten Faservorbereitungsanlage kann die Steuerung durch die Auswertung der Qualitätsmerkmale einzelner Reinigungsstellen auch darauf schliessen, dass nicht eine Veränderung der Einstellung einer Reinigungsstelle sondern eine Änderung der Betriebsart von den Abgang an der analysierten Reinigungsstelle beeinflussender Maschinen eine grössere Wirkung erzielen würde.

Besonders bevorzugt kann durch die Auswertung nicht nur der Anteil der Gutfasern im Abgang sondern auch die Verteilung der Schmutzpartikel nach Art und Grösse bestimmt. Aus den Daten wird das Qualitätsmerkmal berechnet welches eine Aussage zum Anteil der Gutfasern und der Zusammensetzung der Schmutzteile enthält.

In einer Weiterentwicklung wird ein durch die optische Bilderfassung erzeugtes Bild mit Hilfe eines neuronalen Netzwerks analysiert. Neuronale Netzwerke sind in der Lage, große Mengen an unstrukturierten Daten, beispielsweise Bilder, besonders gut auszuwerten und Muster in ihnen zu finden. Ein Neuron ist eine mathematische Formel, die einen Input verarbeitet und daraus einen Output generiert. Die Werte der Formel werden dabei durch die Ausgangsdaten definiert. Viele künstliche Neuronen arbeiten zusammen und ergeben so ein künstliches neuronales Netzwerk. Damit neuronale Netze funktionieren, benötigen sie Daten, deren Ergebnis sie kennen, um aus diesen zu lernen, dieser Prozess wird Training genannt. Dabei werden vorhandene Bilder manuell ausgewertet und das Resultat dem Netzwerk zur Verfügung gestellt. Das Netzwerk führt in der Folge eine Berechnung aus und schaut, ob diese zum erwarteten Ergebnis passt. Das neuronale Netzwerk nimmt ein Bild, löst die einzelnen Pixel in Daten auf (zum Beispiel einen Farbwert) und berechnet dann mit diesen Daten in einer komplexen Formel ein Ergebnis, das es danach mit dem Resultat der manuellen Auswertung vergleicht. Stimmen Ergebnis der Formel und die manuelle Auswertung überein, hat das Netzwerk ein Bild richtig erkannt. Stimmen Ergebnis der Formel und manuelle Auswertung nicht überein, stimmt die Berechnung noch nicht und es muss noch weitertrainieren.

Ein neuronales Netzwerk löst diese Berechnung nicht durch Wissen, sondern durch Ausprobieren - es optimiert die einzelnen Werte in den Neuronen solange, bis das tatsächliche Ergebnis dem gewünschten Ergebnis entspricht. Dabei werden üblicherweise tausende von Parametern gleichzeitig angepasst, in vielen sehr kleinen Schritten. Diese Schritte werden nun wiederholt - viele Tausende bis Millionen Male und nicht nur mit einem Bild, sondern mit vielen verschiedenen Bildern. Jedes Mal verändern sich die Neuronenwerte dabei ein wenig. Am Ende dieses Prozesses sind die Neuronen dann aber so fit, dass sie in Bildern Gutfasern von Trash unterscheiden können. Das neuronale Netzwerk kann in der Folge nicht nur die Bilder unterscheiden, die es bereits kennt und gelernt hat richtig einzuordnen, es kann dies auch bei Bildern, die es noch nie gesehen hat. Das Netzwerk hat von den Trainingsbildern ein allgemeines Muster abstrahiert, das es nun auf neue Bilder anwenden kann.

Weiter wird eine Vorrichtung vorgeschlagen zur Erfassung eines Abganges in einer Faservorbereitungsanlange mit einer Mehrzahl von Reinigungsstellen und mit einer Transportleitung, welche mit den Reinigungsstellen verbunden und in einen zentralen Behälter geführt ist sowie einer Unterdruckquelle zur Erzeugung von Transportluft. Der zentrale Behälter weist einen Transportluft-Abscheider und eine Waage auf und ist mit einer in einen Innenraum der Waage gerichteten Kamera versehen zur optischen Erfassung des in der Waage befindlichen Abgangs. Die Verbindung von einer Reinigungsstelle mit der Transportleitung ist jeweils mit einem Absperrorgan versehen. Dies ermöglicht einen Transport von Abgang aus einer einzelnen Reinigungsstelle und verhindert eine Mischung der Abgänge und damit eine ungenaue Bewertung der Effizienz der einzelnen Reinigungsstellen.

Ein Boden der Waage ist bevorzugterweise als Klappe ausgeführt. Nach der Verwiegung und einer optischen Erfassung des sich im zentralen Behälter befindlichen Abgangs kann dieser durch die Klappe einfach und restlos in einen Restbehälter entsorgt werden. Alternativ könnte der Abgang auch aus dem zentralen Behälter abgesaugt werden.

In einer Weiterentwicklung der Erfindung wird eine Faservorbereitungsanlage mit einer Vorrichtung nach der vorherigen Beschreibung vorgeschlagen, wobei die Faservorbereitungsanlage eine optische Bilderfassung eines in die Faservorbereitungsanlage eintretenden Fasergutes und eine Auswertung der optischen Bilderfassung zur Berechnung eines Qualitätsmerkmals des Fasergutes aufweist und dieses Qualitätsmerkmal zur Grundeinstellung der Reinigungsstellen vorgesehen ist. Typischerweise tritt das Fasergut in Form von Faserballen in eine Faservorbereitungsanlage. Die Faserballen werden meist durch sogenannte Ballenöffner auseinandergenommen und das Fasergut in Form von Faserflocken der weiteren Bearbeitung in der Faservorbereitungsanlage zugeführt. Durch die optische Bilderfassung der Faserballen und die nachfolgende Analyse der Bilder kann aufgrund der berechneten Qualitätsmerkmale des Fasergutes die Anordnung, Einstellung und Betriebsweise der einzelnen Maschinen der Faservorbereitungsanlage überprüft respektive optimiert werden. Diese Vorgehensweise ermöglicht eine Einstellung der Maschinen auf ein zu erwartendes Fasergut.

Im Folgenden wird die Erfindung anhand von einer beispielhaften Ausführungsform erklärt und durch Zeichnungen näher erläutert. Es zeigen
- **Figur 1**: eine schematische Darstellung einer Faservorbereitungsanlage mit einer er-findungsgemässen Vorrichtung und
- **Figur 2**: eine schematische Darstellung eines zentralen Behälters zur Erfassung des Abganges nach der Erfindung.

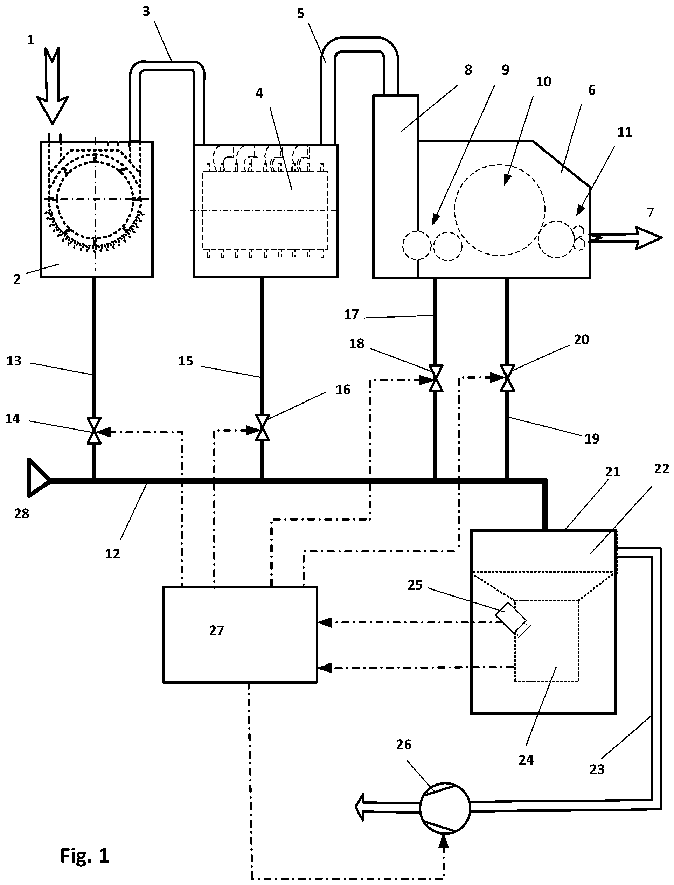

Figur 1 zeigt eine schematische Darstellung einer Faservorbereitungsanlage mit einer erfindungsgemässen Vorrichtung. Zu bearbeitende Fasern respektive Faserflocken werden über eine nicht näher gezeigte Faserzuführung 1 in einen Grobreiniger 2 geführt. Über eine Förderleitung 3 gelangen die Fasern vom Grobreiniger 2 zum Feinreiniger 3 und von diesem über eine weitere Förderleitung 5 zu einer Karde 6. Nachdem die Fasern respektive die Faserflocken durch die verschiedenen Reinigungs- und Bearbeitungsstufen geführt wurden, verlassen sie in Form eines Faserbandes 7 die Karde 6 zur weiteren Bearbeitung. In der gezeigten Ausführung ist am Grobreiniger 2 und am Feinreiniger 3 jeweils eine Reinigungsstelle vorgesehen. Die Karde 6 in welcher die Fasern über einen Füllschacht 8 eingebracht werden und anschliessend in einem Vorreisser 9 grob gereinigt und an eine Trommel 10 übergeben werden. Am Umfang der Trommel 10 werden die Fasern weiter gereinigt und parallelisiert und gelangen anschliessend über einen Abnehmer in eine Bandbildungseinheit 11 durch welche die Fasern zum Faserband 7 geformt werden. Die Karde 6 weist in der gezeigten Ausführung eine Reinigungsstelle am Vorreisser 9 und eine weitere Reinigungsstelle an der Trommel 10 auf.

Die Reinigungsstellen sind einzeln an eine Transportleitung 12 angeschlossen welche dem Abtransport eines in den Reinigungsstellen anfallenden Abgangs dient. So ist die Reinigungsstelle des Grobreinigers 2 über die Verbindung 13 mit der Transportleitung 12 verbunden, wobei in der Verbindung 13 ein Absperrorgan 14 vorgesehen ist. Durch das Absperrorgan 14 kann die Verbindung 13 geschlossen und damit die Reinigungsstelle des Grobreinigers 2 von der Transportleitung 12 abgekoppelt werden. Weiter ist Reinigungsstelle des Feinreinigers 3 über die Verbindung 15 mit der Transportleitung 12 verbunden, wobei in der Verbindung 15 ein Absperrorgan 16 vorgesehen ist. Weiter ist die Reinigungsstelle des Vorreissers 9 der Karde 6 über die Verbindung 17 mit der Transportleitung 12 verbunden, wobei in der Verbindung 17 ein Absperrorgan 18 vorgesehen ist. Weiter ist die Reinigungsstelle der Trommel 10 der Karde 6 über die Verbindung 19 mit der Transportleitung 12 verbunden, wobei in der Verbindung 19 ein Absperrorgan 20 vorgesehen ist.

Die Transportleitung 12 ist mit einem zentralen Behälter 21 verbunden und weist an ihrem dem zentralen Behälter entgegengesetzten Ende eine Zuluftöffnung auf. Über den zentralen Behälter ist die Transportleitung 12 mit einer Unterdruckquelle 26, in der gezeigten Ausführungsform einem Ventilator, verbunden. Durch den Ventilator wird die zur Absaugung des Abgangs an den verschiedenen Reinigungsstellen notwendige Transportluft erzeugt.

Der zentrale Behälter 21 umfasst einen Transportluft-Abscheider 22 eine Waage und eine auf den Innenraum der Waage 24 gerichtete Kamera 25. Die Waage 24 und die Kamera 25 wie auch der Ventilator 26 und die Absperrorgane 14, 16, 18 und 20 sind mit einer Steuerung 27 verbunden. Durch die Steuerung 21 wird eine Überführung des Abgangs aus einer Reinigungsstelle initiiert. Dazu wird beispielsweise das Absperrorgan 14 in der Verbindung 13 der Reinigungsstelle des Grobreinigers 2 geöffnet und der Ventilator 26 eingeschaltet. Der Abgang des Grobreinigers 2 wird damit durch die Transportleitung 12 in den zentralen Behälter 21 gesaugt, von der Transportluft befreit und in die Waage 24 gefüllt. Der Vorgang des Füllens der Waage 24 wird durch ein Schliessen des Absperrorgans 14 abgeschlossen. Anschliessend wird der Abgang gewogen und durch die Kamera 25 optisch erfasst. Die verschiedenen Reinigungsstellen werden auf diese Art nacheinander entleert und der daraus abgesaugte Abgang dem zentralen Behälter 21 zugeführt. Nach der Verwiegung und optischen Erfassung des Abgangs wird durch die Steuerung eine Analyse des Abgangs durchgeführt.

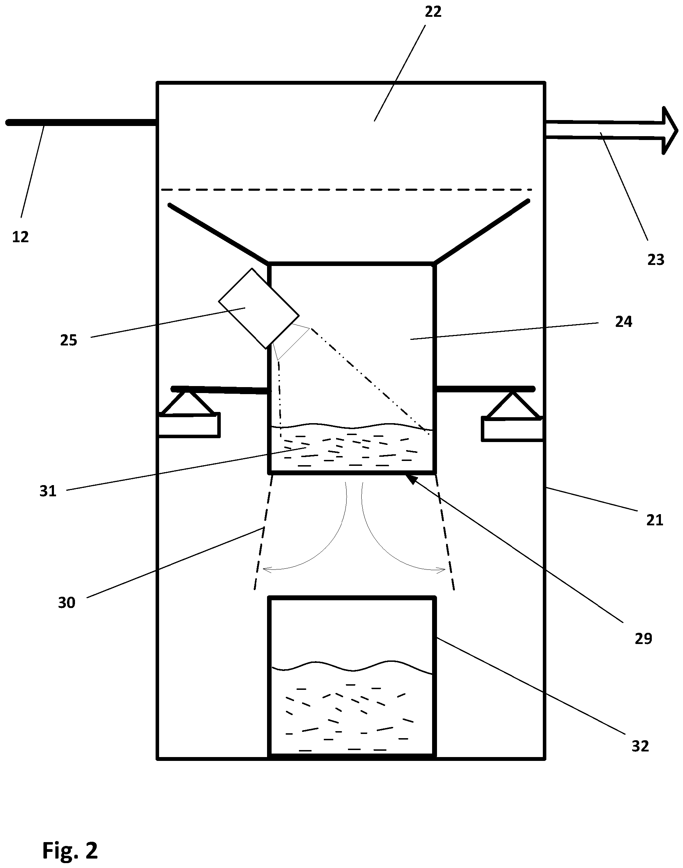

Figur 2 zeigt eine schematische Darstellung eines zentralen Behälters 21 zur Erfassung des Abganges 31 nach der Erfindung. Über die Transportleitung 12 gelangt der Abgang 31 zusammen mit der Transportluft 23 in den Transportluft-Abscheider 22. Durch den Transportluft-Abscheider 22 wird die Transportluft 23 vom Abgang 31 getrennt, der Abgang 31 gelangt in die Waage 24 und die Transportluft 23 wird mit Hilfe der Unterdruckquelle (nicht gezeigt) abgeführt. Der Abgang 31 wird in der Folge gewogen und mit einer Kamera 25 optisch erfasst. Der Boden 29 der Waage 24 ist als Klappe 30 ausgeführt. Nach dem Verwiegen und dem optischen Erfassen des Abgangs 31 wird die Klappe 30 geöffnet und der Inhalt der Waage 24 in einen Restbehälter 32 entleert.

Nachdem die Klappe 30 wieder geschlossen ist, kann der Abgang einer weiteren Reinigungsstelle in den zentralen Behälter 21 verbracht werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Legende

- 1: Faserzuführung
- 2: Grobreiniger
- 3: Förderleitung
- 4: Feinreiniger
- 5: Förderleitung
- 6: Karde
- 7: Faserband
- 8: Füllschacht
- 9: Vorreisser
- 10: Trommel
- 11: Bandbildungseinheit
- 12: Transportleitung
- 13, 15, 17, 19: Verbindung
- 14, 16, 18, 20: Absperrorgan
- 21: Zentraler Behälter
- 22: Transportluft-Abscheider
- 23: Transportluft
- 24: Waage
- 25: Kamera
- 26: Unterdruckquelle
- 27: Steuerung
- 28: Zuluftöffnung
- 29: Boden der Waage
- 30: Klappe
- 31: Abgang
- 32: Restbehälter

## Patentansprüche

1. Verfahren zur Erfassung eines Abganges (31) in einer Faservorbereitungsanlage mit einer Mehrzahl von Reinigungsstellen und einer Transportleitung (12), welche mit den Reinigungsstellen verbunden und in einen zentralen Behälter (21) geführt ist, wobei der zentrale Behälter (21) mit einer Unterdruckquelle (26) zur Erzeugung von Transportluft (22) verbunden ist und der Abgang (31) von jeweils einer Reinigungsstelle durch die Transportleitung (12) mit der Transportluft (22) zum zentralen Behälter (21) gesaugt wird, **dadurch gekennzeichnet, dass** der Abgang (31) jeder Reinigungsstelle separat dem zentralen Behälter (21) zugeführt wird und dass im zentralen Behälter (21) der Abgang (31) von der Transportluft (22) getrennt und in eine Waage (24) übergeben und gewogen wird und dass mit einer auf einen Innenraum der Waage (24) gerichteten Kamera (25) der sich in der Waage (24) befindliche Abgang (31) optisch erfasst wird.

2. Verfahren nach Anspruch 1, **dadurch gekennzeichnet, dass** nach Verwiegung und optischer Erfassung des Abgangs (31) die Waage (24) über eine im Boden (29) der Waage (24) befindliche Klappe (30) in einen Restbehälter (32) entleert wird.

3. Verfahren nach einem der vorangehenden Ansprüche, **dadurch gekennzeichnet, dass** durch eine Auswertung der optischen Bilderfassung ein Qualitätsmerkmal des Abgangs (31) bestimmt wird.

4. Verfahren nach Anspruch 3, **dadurch gekennzeichnet, dass** das Qualitätsmerkmal zur Optimierung einer Einstellung der entsprechenden Reinigungsstelle verwendet wird.

5. Vorrichtung zur Erfassung eines Abganges (31) in einer Faservorbereitungsanlange mit einer Mehrzahl von Reinigungsstellen, mit einer Transportleitung (12), welche mit den Reinigungsstellen verbunden und in einen zentralen Behälter (21) geführt ist, und mit einer Unterdruckquelle (26) zur Erzeugung von Transportluft, **dadurch gekennzeichnet, dass** die Verbindung (13, 15, 17, 19) von einer Reinigungsstelle mit der Transportleitung (12) jeweils mit einem Absperrorgan (14, 16, 18, 20) versehen ist und dass der zentrale Behälter (21) einen Transportluft-Abscheider (22) und eine Waage (24) aufweist und mit einer in einen Innenraum der Waage (24) gerichteten Kamera (25) versehen ist zur optischen Erfassung des in der Waage (24) befindlichen Abgangs (31).

6. Vorrichtung nach Anspruch 5, **dadurch gekennzeichnet, dass** ein Boden (29) der Waage (24) als Klappe (30) ausgeführt ist.

7. Faservorbereitungsanlage mit einer Vorrichtung nach mindestens einem der Ansprüche 5 oder 6, **dadurch gekennzeichnet, dass** die Faservorbereitungsanlage eine optische Bilderfassung eines in die Faservorbereitungsanlage eintretenden Fasergutes (1) und eine Auswertung der optischen Bilderfassung des eintretenden Fasergutes (1) zur Berechnung eines Qualitätsmerkmals des Fasergutes (1) aufweist und das Qualitätsmerkmal zur Grundeinstellung der Reinigungsstellen vorgesehen ist.
